Europäisches Patentamt

European Patent Office

Office européen des brevets

(19)

(11) Publication number: **0 086 925**
A1

(12) **EUROPEAN PATENT APPLICATION**

(21) Application number: **82830302.4**

(22) Date of filing: **16.12.82**

(51) Int. Cl.³: **F 02 D 15/04**
**F 02 B 17/00, F 01 L 7/04**
**F 02 B 31/00, F 02 F 1/22**

(30) Priority: **23.02.82 IT 4784582**

(43) Date of publication of application:
**31.08.83 Bulletin 83/35**

(84) Designated Contracting States:
**DE FR GB**

(71) Applicant: **Ferraro, Enrico Luigi**
**Via Latina 132**
**I-00179 Roma(IT)**

(72) Inventor: **Ferraro, Enrico Luigi**
**Via Latina 132**
**I-00179 Roma(IT)**

(54) **Controlled ignition thermic engine with variable compression ratio and with low exhaust's pollution.**

(57) The engine, subject of the present report, is an internal combustion and controlled ignition type. It have the particularity that the volume of the explosion chamber can be vary, and hence the geometrical compression ratio can be vary according to the working conditions of the engine. The result of it is that the thermal efficiency will be improved, and hence the specific consumption (comparing it with a traditional controlled ignition engine) will reduce.

Besides the engine works profiting by the stratification of the air-gasolene mixture. It is obtained for centrifugation of the mixture inside the explosion chamber. The result of it is that the engine can work with a very poor mixture, and hence, besides to produce a further saving of fuel, it allows a very low exhaust's pollution.

Part. A

DESCRIPTION

of the industrial invention named:

CONTROLLED  IGNITION  THERMIC  ENGINE  WITH  VARIABLE

COMPRESSION  RATIO  AND  WITH  LOW  EXHAUST'S  POLLUTION

by  FERRARO  Enrico Luigi, italian nationality, residence:

132  via  Latina,  00179 - ROMA - ITALY.

1 -  ABSTRACT.

The engine, subject of the present report, is an internal combustion and controlled ignition type. It have the particularity that the volume of the explosion chamber can be vary, and hence the geometrical compression ratio can be vary according to the working conditions of the engine. The result of it is that the thermal efficiency will be improved, and hence the specific consumption (comparing it with a traditional controlled ignition engine) will reduce.

Besides the engine works profiting by the stratification of the air-gasolene mixture. It is obtained for centrifugation of the mixture inside the explosion chamber. The result of it is that the engine can work with a very poor mixture, and hence, besides to produce a further saving of fuel, it allows a very low exhaust's pollution.

2 -  TEXT  OF  THE  DESCRIPTION.

The working of the engine subject of the present report, as touched upon in the summary, is based on two principles:

- the variable geometrical compression ratio;
- the stratification of the air-gasolene mixture in the explosion chamber.

We specify that the two principles can be used singularly (in fact is possible to make engines that have only the varia
ble compression ratio, or engines with fixed compression ratio
which use only the stratification), or both principles can be
used in the same engine.   But it will be inspected bit by bit
following upon.


2.1. - Prerogatives of the variable compression ratio.

Is well-known that, in an internal combustion engine, the
thermic efficiency is higher when the compression ratio is high;
but in the controlled ignition engines the maximum limit of the
geometrical compression ratio can not be more than $8 \div 10$ abo
ut, because otherwise the mixture will get alight oneself, and
the combustion will be for detonation.

In a traditional engine with fixed compression ratio, in
the working conditions in which the quantity of sucked mixture
is the highest (with full open throttle valve and low rotation
working regimen of engine), the real compression of mixture is
such that it is near the limit of the self-ignition.   In all
other conditions of working, the quantity of sucked mixture is
lower (even notably) than the maximum limit.   Hence,if the
geometrical compression ratio is fixed, the real compression
of the mixture will be lower (even notably) than the self-igni
tion limit.   In this last conditions of engine's working, the
thermal efficiency will be the lower, than the compression of
the mixture will be the further from the self-ignition limit.

If where possible to vary the bursting chamber volume, in
such a way as, in any working condition of engine, the mixture
is in any case compressed to limits which are near the self-
ignition limit, during the practical working on the road, the
global thermal efficiency of the engine will be constantly high, and in consequence the specific consumption will be low.

In the drawing of the "PLATE I" is schematically designed an engine with the variable geometrical compression ratio: it is similar to a traditional engine, and the differences are only in the head.

On the head of each cylinder is obtained a smaller cylinder (the diameter of it is about the half of the master cylinder), and a piston can run in it. With a mechanism, which can be a rod and handle type, the piston can be placed in different positions. Has been named "H" the maximum trip between the lower and the highest position, and "$\alpha$" the correspondent rotation of the handle.

When the engine will suck the maximum quantity as possible of air-gasolene mixture, the small piston must be in the highest position, to which corresponds the maximum volume of the bursting chamber, and the compression ratio will be $8 \div 10$, like in a traditional engine.

In different conditions of working, in which the quantity of air-gasolene mixture will be less, the small piston must be in the lower position, in such a way the volume of the bursting chamber will be reduced, and the mixture will be compressed near to the self-ignition limit.

Will be explained after about the details of the driwing mechanism of the small piston.

## 2.2. – Prerogatives of the stratification of the air-gasolene mixture.

Is well-known, that in a controlled ignition engine, the start of the combustion will be good if the mixture will have a gasolene excess of $10 \div 15$ %, compared with the stekyometric

0086925

ratio (which when is exactly respected, theoretically should happen the full combustion, without the appearance in the ex haust's gases neither  of oxygen, nor of hydro-carbides or carbon mono-oxid).

The scarcity of air in the combustion causes an incomplete "thermic power use" of the fuel, because the amount of oxygen is not enough for to combine with all the molecules of carbon and hydrogen, to form only carbon dioxid and water.   And so in the exhaust's gases are present unburned hydro-carbides and carbon mono-oxid.   that, besides to pollute the atmosphere, produces the loss of substances, which should have given a fur ther quantity of power, if they had burnt inside the engine.

The stratification of the mixture should give a not negligi ble gain.   This consists in the introduction of a mixture in the cylinder, which is on an average poor of gasolene, but the concentration of it must not to be the same in every zone of the explosion chamber, but the mixture must be richer near the spark-plug, and poorer in the other zones.

Therefore, if the spark shoots in a rich mixture, the pri ming of the explosion will be good, and the combustion, when started, will continue well in the other zones of the explosion chamber successively;   and, if there is on an everage excess of the air, in comparison with the stekyometric ratio, the com bustion will happen completely.

Therefore there will be a double gain: first, to utilize completely the thermic power of the fuel, that allows the reduc tion of the specific consumption; second, in the exhaust's ga ses there will be only carbon dioxid, water, nitrogen and oxy gen, that all of them arent polluting gases.

Have been found besides, that with a combustion, which starts in a rich mixture, and is followed with a poor mixture, it doesn't reach the high temperatures, which are propitious to the making of the nitrogen oxides, which, for the pollution, are very harmfull gases.

A way to obtain the stratification of the mixture is the one for centrifugation. Is possible to obtain the stratifica tion for centrifugation, setting to the mixture a quick rota ting motion inside the cylinder; since the fuel's fumes are heavyer than the air, near the periphery there will be a higher concentration of hydro-carbides than in the centre. If the spark-plug will be placed in a way where the spark shoots in the peripherical zone, there will be a good priming of the combu stion, which, if in the chamber there is on an average excess of air, it will happen completely.

To obtain the centrifugation there are other ways, but every one depends upon the conformation of the suction valve.

The easiest of them, reported in the Part. "A" of the "PLATE III", is obtained placing on the body of the suction valve, which has a traditional form of a mushroom, some small round blades, as is represented in the section on the drawing.

A second system, which is more efficient, is the one that is represented in the "PLATE II" (where is schematically re presented a fixed compression ratio engine, which profit by the principle of the stratification for centrifugation).

Rather than from a traditional mushroom form valve, the suc tion happens throughth some holes, which are obtained on the la teral wall of the cylinder, and every one of they has the same inclination with the radius.

The rotatory motion is multiplied in the combustion chamber (for the principle of the "maintenance of the motion's quantity") because the chamber has a smaller diameter than the main cy linder.

The closing of the holes, during the compression, explosion, and exhaust cycles, is assured by automatic valves, which can be of different types, but the exact characteristics of them will be defined only after accurate experimental tests.

However we touch upon four possible types of them:

a - Elastic thin plate valve (like one used in the 2 strokes engines); is the easiest type to make, but it could have some impediment for the resistance to the pressure and for the high temperature (see the PLATE II).

b - Hinged plate valve; it is more complicated to make than the previous type, but, because the "call back spring" (which can be of a very different types: like a plate, like a spiral, and so on) is distinct from the closing plate, it can have an enough thickness to endure pressure, also with relatively large holes (see PLATE III, part. B).

c - Elastic thin plate valve, similat to the "a" type, but located in the lower side of the cylinder's wall (see the PLATE III, part. C): in such a way, mechanical and ther mal influence will be lower than ones of the first type, but the volume's efficiency should be a little lower.

d - Gliding curb valves (see the PLATE III, part. D); they are the most complicated to make, because they aren't automatic, and is necessary an opening and closing mecha nism.

2.3. - Joining of the variable compression ratio and of the mixture's stratification.

Both principles explained in the back chapters numbers 2.1.

and 2.2. produce a reduction of the fuel's specific consumption in comparison with a similar traditional engine.

The first one improving the thermal efficiency of the ther modynamic cycle, the second one because all the fuel is burnt in the interior of the cylinders. This two principles are not connected-and they aren't incompatible between them.

Therefore it is possible to make an engine, which will pro fit by both principles in it's performances.

The easyest way to make a such engine, (because it employs for the most of components of traditional engines) is the one which is schematically represented in the"PLATE I", but with the suction valve like is represented in the"part. A of the PLATE III" (mushroom form valve with small round blades).

A more complicated (but probably more efficient) type of such engine is the one represented in the "part. A of the PLATE IV". In it the suction valve is elastic thin plate type, like the one that at the "2.2.a" back paragraph (but it should be alike of one of other types mentioned at the pre vious paragraphs "b", "c" and "d"), but the exhaust valve is worth of a particular consideration.

A normal valve mushroom type chould haven't found space enough on the head of the cylinder, except to displace in an asymmetrical position the smaller one for the variation of the compression ratio. Therefore exhaust's valve has been substituted with a "compling-box-like", which has the same axis of the small cylinder, and the lower edge moulded like a cone, which, when the valve is closed, fits with a similar conical seat. In the interior of it is the piston that vary the compression ratio.

This "compling-box-like", when is in the high position

0086925

(has been shovn "h" it's top level, and "β" the corresponding turning of the controlling beam), let go out exhaust gases from the combustion chamber to the exhaust pipe.

The works that actuate such valve, can be desmodromic type with cammes, like is shown on the schematic drawing, or with a single camme and colling-up spring.

A different type of the exhaust valve (in advance to the traditional type like mushroom, but with the small cylinder in asymmetrical position), can be, like the type that at 2.2.d. back paragraph for the suction valve, a gliding curb valve located on the lower side of the small cylinder, but will be necessary to leave an appropriate space for the spark-plug.

### 2.3. – Mecanical movement of the piston for the compression ratio variation.

The mecanical movement of the piston for the compression ratio variation, on the drawings of "PLATE I" and the "Part. 'A' of PLATE IV", is a connecting rod and handle type, but it can be a different type too. For example with an eccentric drive (see the Part. 'B' of the PLATE IV), or a screw type driven by a worm-drive (see the Part. 'C' of the PLATE IV).

The eccentric drive type is more cumbersome that the rod and handle type, but the first has the prerogative that it doesn't give a lateral push on the piston and the torque on the driving shaft is lower.

The worm-drive type has also the prerogative that the push on the piston is perfectly alined with the same axis of it, and it is specially fit for an electric servo-driving, because the worm-drive can be directly connected with the shaft of the electric driving engine.

0086925

Of course, as touched upon, will be necessary an automatic servo-driving, which can be electric, or hydraulic or pneumatic.

For the automatic regulation of the servo-driving, which can be accomplished only after attentive experiments, keeping in mind, in the easiest of the hypotesis, of the suction depression and the engine's revolution regimen. Besides, increasing it's sophystication, for the more keeping in mind also of the other variables, like the barometric pressure and the speed in pushing of the accelerator pedal.

To such end should be usefull an apposite mini-computer, like the one now employed for the electronik fuel-spray apparatus.

The characteristics of the servo-driving can be exactly determined only after researchs. For the time being, we specify only that it must be able to perform the highest lifting "H" of the small piston in a time of the rank from 2 to 4 tenths of second about. In fact should have the possibility to proceed from the highest compression ratio (for exemple when the engine works at lowest regimen) to the lowest compression ratio, in the same time necessary to go to the bottom with the accelerator's pedal (when in a quick start).

We specify yet that, if the above-mentioned time can possibly seem very short, it has to be taken in consideration that the lifting of the piston is helped by internal pressure in the bursting chamber.

The full lowering of the piston, on the contrary, can be relatively in a longer time.

●●●●●●●●●●

THE INVENTOR
(Enrico Luigi FERRARO)

CONTROLLED IGNITION THERMIC ENGINE WITH VARIABLE
COMPRESSION RATIO AND WITH LOW EXHAUST'S POLLUTION

VINDICATIONS. (CLAIMS)

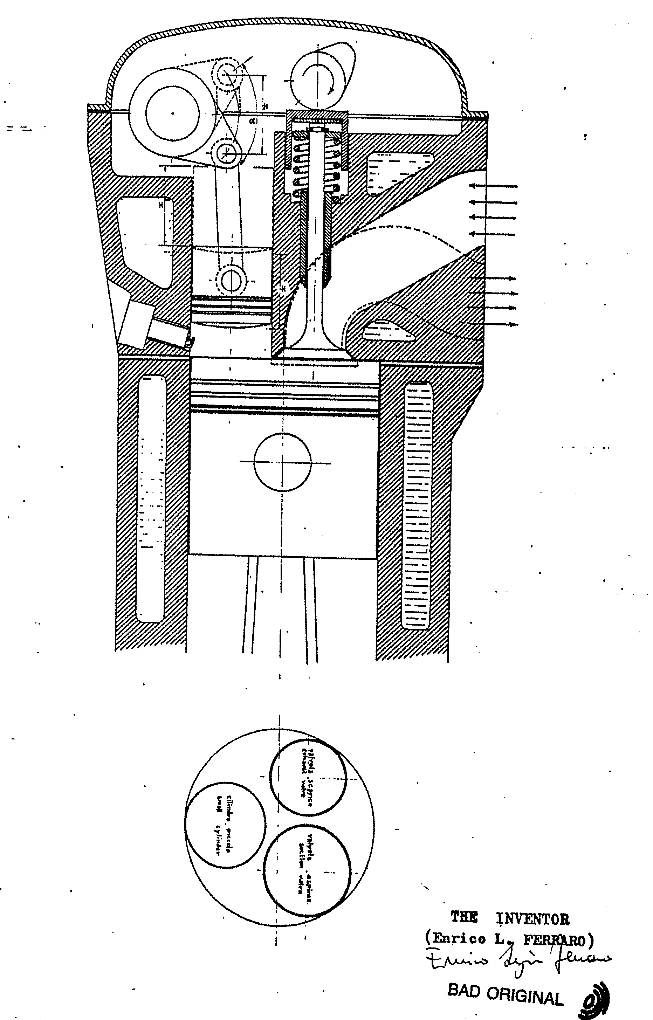

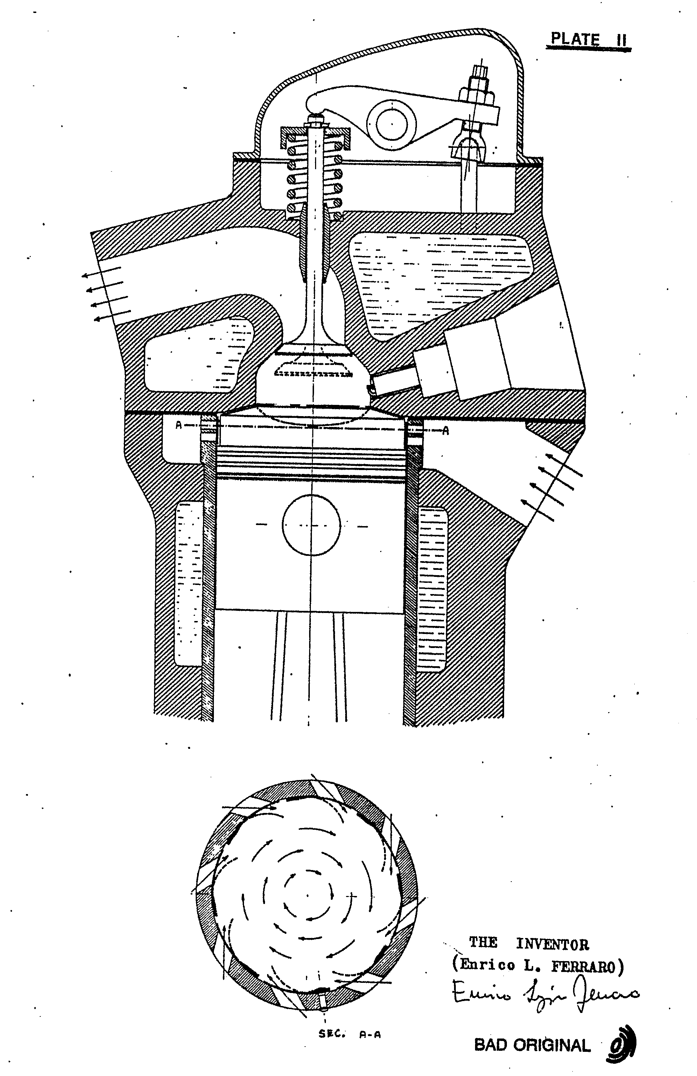

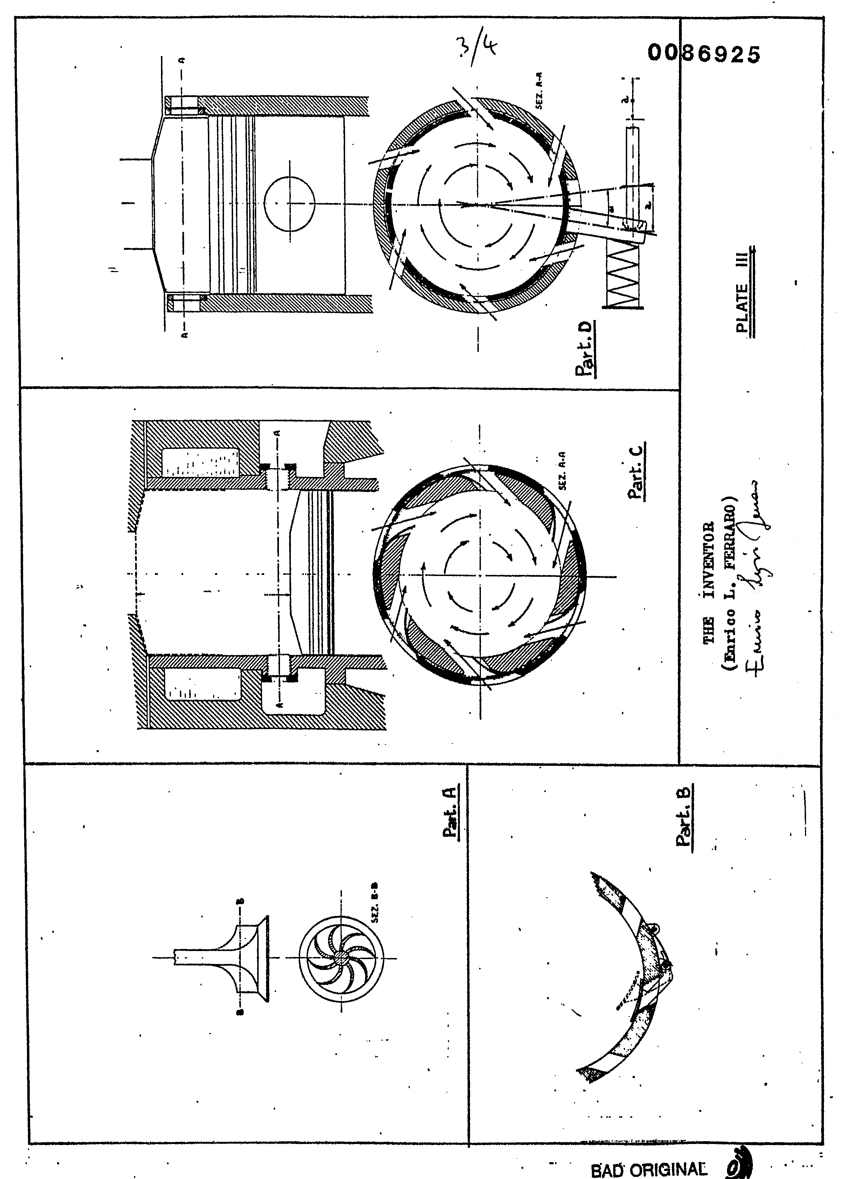

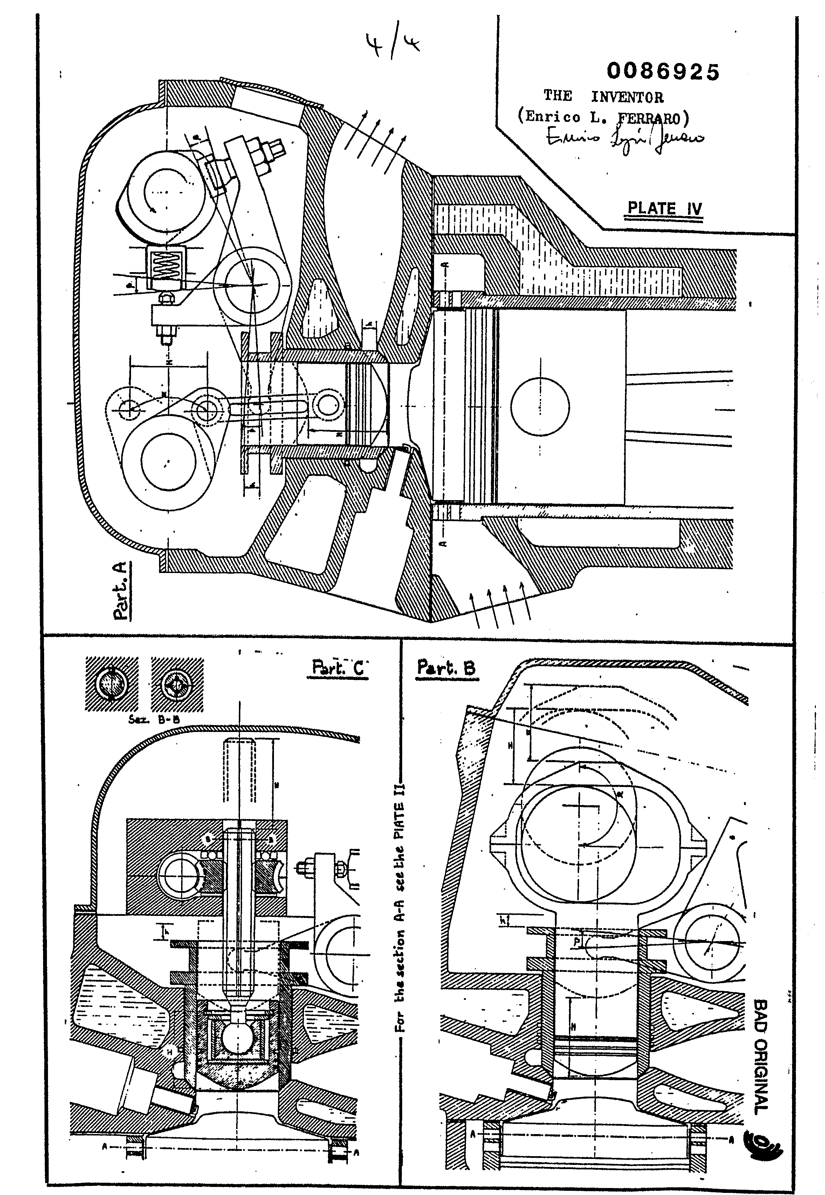

1. - Variable compression ratio engine, like the project of
the "PLATE I"; the driving mechanism of the small piston
can be one of the types handled in the following para
graphs 3.11., 3.12., and 3.13..

2. - Engine working with stratificated by centrifugation
mixture, like the project of the "PLATE II"; the suction
valve can be of the types handled in the following para
graphs 3.5., 3.6., 3.7. and 3.8..

3. - Variable compression ratio engine and working with the
stratificated by centrifugation mixture, like the pro
ject of the "PLATE I", with mushroom-shape suction valve
with round blades (like in the Part. 'A' of the PLATE
III); the driving mechanism of the small piston can be
one of the types handled in the following paragraphs
3.11., 3.12. and 3.13..

4. - Variable compression ratio engine and working with the
stratificated by centrifugation mixture, like the pro
ject of the "PLATE IV - Part. 'A'"; the driving mecha
nism of the small piston can be one of the types handled
in the following paragraphs 3.11., 3.12. and 3.13.; the
suction valve can be one of the types handled in the fol
lowing paragraphs 3.5., 3.6., 3.7. and 3.8.; the exhaust
valve, besides a gliding compling-box-like, can be also
a traditional mushroom-shape valve, or a type handled
in the following paragraph 3.10..

5. - Suction valve elastic-thin-plate type, like the project
of the Section A-A of the "PLATE II"; it can be utilized
on the engines of the previous paragraphs 3.2. and 3.4..

6. - Suction valve hinged-plate type, like the project of the "Part. 'B' of the PLATE III"; the "call back spring" can be a spiral or a plate; it can be utilized on the engines of the previous paragraphs 3.2. and 3.4..

7. - Suction valve elastic-thin-plate type, located in the lower side of the main cylinder's wall, like the project of the "Part. 'C' of the PLATE III"; it can be utilized on the engines of the previous paragraphs 3.2. and 3.4..

8. - Suction valve gliding-curb type, like the project of the "Part. 'D' of the PLATE IV"; it can be utilized on the engines of the previous paragraphs 3.2. and 3.4..

9. - Exhaust valve gliding compling-box-like, like the project of the "Part. 'A' of the PLATE IV"; it can be utilized on the engine of the previous paragraph 3.4..

10. - Exhaust valve gliding-curb type, similar the suction one of the previous paragraph 3.8., but smaller and located on the lower margin of the small cylinder; it can be utilized on the engine of the previous paragraph 3.4..

11. - Driving mechanism of the small piston, which vary the compression ratio, rod and handle type, like the project of the "PLATE I"; it can be utilized on the engines of the previous paragraphs 3.1., 3.3. and 3.4..

12. - Driving mechanism of the small piston, which vary the compression ratio, eccentric type, like the project of the "Part. 'B' of the PLATE IV"; it can be utilized on the engines of the previous paragraphs 3.1., 3.3.,3.4..

13. - Driving mechanism of the small piston, which vary the compression ratio, screw type, like the project of the "Part. 'C' of the PLATE IV"; it can be utilized on the engines of the previous paragraphs 3.1.,3.3. and 3.4..

oooooooo

The inventor

(Enrico Luigi FERRARO)

*Enrico Luigi Ferraro*

BAD ORIGINAL

0086925

PLATE I

THE INVENTOR
(Enrico L. FERRARO)

BAD ORIGINAL

0086925

<u>PLATE II</u>

SEC. A-A

THE INVENTOR
(Enrico L. FERRARO)

0086925

3/4

SEZ. A-A

Part. D

PLATE III

Part. C

SEZ. A-A

THE INVENTOR
(Enrico L. FERRARO)

Part. A

SEZ. B-B

Part. B

0086925

THE INVENTOR
(Enrico L. FERRARO)

PLATE IV

Part. A

Part. C

Sez. B-B

For the section A-A see the PLATE II

Part. B

BAD ORIGINAL

European Patent
Office

**EUROPEAN SEARCH REPORT**

**0086925**
Application number

EP 82 83 0302

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| Y,X | US-A-2 666 421 (RING)<br>* Column 1, lines 1-49 * | 1,11 | F 02 D 15/04<br>F 02 B 17/00<br>F 01 L 7/04<br>F 02 B 31/00<br>F 02 F 1/22 |
| Y,X | US-A-2 145 017 (TSUNEDA)<br>* Page 1, right-hand column, lines 3-28 * | 1,13 | |
| Y,X | FR-A- 338 653 (CANNEVEL)<br>* Page 1, lines 34-55 * | 1,12 | |
| Y | US-A-4 162 663 (OMC)<br>* Column 1, lines 10-44 * | 2-5,7 | |
| X | DE-B-1 043 708 (GOIOT)<br>* Columns 5,6 * | 1,9 | |
| A | US-A-1 720 489 (LOBACK)<br>* page 1, right-hand column, lines 56-70 * | 8 | **TECHNICAL FIELDS SEARCHED (Int. Cl. ³)**<br><br>F 02 D<br>F 02 B<br>F 01 L<br>F 02 F |

The present search report has been drawn up for all claims

| Place of search<br>THE HAGUE | Date of completion of the search<br>04-05-1983 | Examiner<br>WASSENAAR G. |
|---|---|---|

EPO Form 1503, 03.82